# EUROPEAN PATENT APPLICATION

(11) **EP 3 159 655 A1**
(43) Date of publication of application: **26.04.2017**
(21) Application number: 16194280.0
(22) Date of filing: 18.10.2016
(51) Int. Cl.: G01B 11/30, G01B 11/06, G01B 11/24, B32B 41/00

(54) **PROFILOMETRY INSPECTION SYSTEMS AND METHODS FOR SPAR CAPS OF COMPOSITE WIND TURBINE BLADES**

(30) Priority: 20.10.2015 US 201514887376
(71) Applicant: General Electric Company, Schenectady, NY 12345 (US)
(72) Inventor: LAMBERTON, Gary Austin, Schenectady, NY New York 12345 (US); ROSE, Curtis Wayne, Schenectady, NY New York 12345 (US)
(74) Representative: Pöpper, Evamaria

(57) **Abstract**

The present application provides a method of inspecting composite turbine blade spar caps during lay-up and a turbine blade profilometry inspection system (280). The method may include the steps of applying a layer (260) to a mold (300), measuring a surface characteristic of the layer (260) with a profilometer (290), and determining if the layer (260) has an out of plane wave (270) therein based on the measured surface characteristic.

## Description

### TECHNICAL FIELD

The present application and the resultant patent relate generally to wind turbine blades and inspection systems therefore and more particularly relate to a profilometry inspection system for a spar cap of a composite wind turbine blade to detect out of plane waves during manufacturing.

### BACKGROUND OF THE INVENTION

Modern wind turbine blades generally combine low weight and low rotational inertia with high rigidity and high resistance to fatigue and wear so as to withstand the various forces in the extreme conditions encountered over a typical life cycle. Generally described, a typical wind turbine blade may be constructed of layers of a composite material outer skin supported by a primary spar. Each layer of the composite material outer skin should be applied in a substantially uniform fashion to ensure that the turbine blade will meet performance and lifetime requirements. Out of plane waves or other types of non-uniformities in the application or the lay up process, however, may reduce the load carrying capacity of the structure and eventually may lead to failure in the field. This may be particularly true with respect to the manufacture of the spar cap and other types of components.

Current methods for the inspection of assembled, cured turbine blade components include visual inspection and various types of non-destructive imaging inspection techniques such as ultrasonic testing. Such ultrasonic testing, however, may have limited use given the highly attenuative material of the outer skin. Computed tomography techniques also may be available but such testing may be time consuming and costly as well as presenting radiation safety concerns.

### SUMMARY OF THE INVENTION

The present application and the resultant patent thus provide a method of inspecting composite turbine blade spar caps during lay up. The method may include the steps of applying a layer to a mold, measuring a surface characteristic of the layer with a profilometer, and determining if the layer has an out of plane wave therein based on the measured surface characteristic.

The present application and the resulting patent further provide a turbine blade spar cap profilometry inspection system. The turbine blade spar cap profilometry inspection system may include a spar cap mold, a composite material applicator positioned about the spar cap mold, and a profilometer positioned about spar cap mold. The profilometer determines a thickness of each layer applied to the spar cap mold by the composite material applicator so as to detect a layer with an out of plane wave.

The present application and the resultant patent further provide a method of inspecting composite material turbine blade components. The method may include the steps of applying a composite material layer to a mold, measuring a surface characteristic of the composite material layer with a profilometer, creating a three-dimensional surface map of the composite material layer, and determining if the composite material layer has an out of plane wave therein.

These and other features and improvements of the present application and the resultant patent will become apparent to one of ordinary skill in the art upon review of the following detailed description when taken in conjunction with the several drawings and the appended claims.

### BRIEF DESCRIPTION OF THE DRAWINGS

Fig. 1 is a schematic diagram of an exemplary wind turbine blade.
Fig. 2 is a side sectional view of a portion of the wind turbine blade of Fig. 1.
Fig. 3 is a schematic diagram of a wind turbine blade profilometry inspection system as may be described herein.

### DETAILED DESCRIPTION

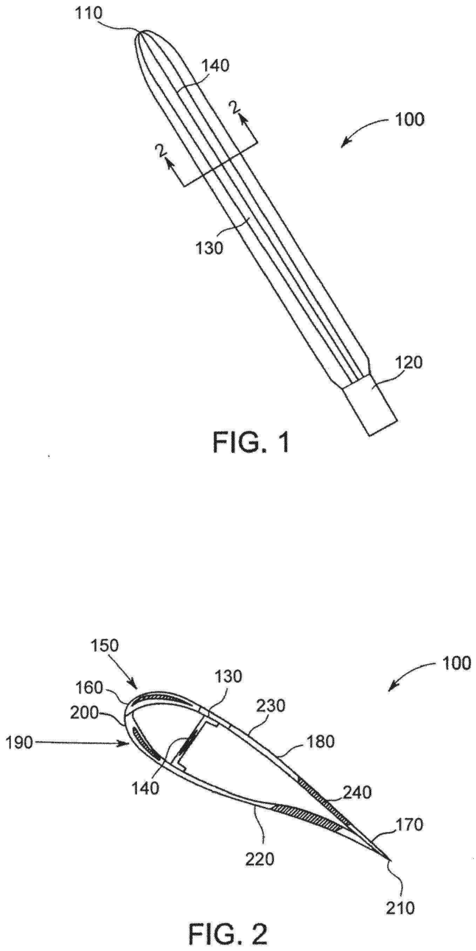

Referring now to the drawings, in which like numerals refer to like elements throughout the several views, Fig. 1 and Fig. 2 show an example of a wind turbine blade 100 as may be described herein. The wind turbine blade may extend from a tip 110 to an opposing root 120. Extending between the tip 110 and the root 120 may be a spar cap 130 and a shear web 140. The shear web 140 may serve as the main structural support element within the wind turbine blade 100. The spar cap 130 may be a composite portion running the length of the wind turbine blade 100 coincident with the shear web 140 so as to accommodate the overall tensile load on the wind turbine blade 100 when in use. The wind turbine blade 100 and the components thereof may have any suitable size, shape, or configuration. Other components and other configurations also may be used herein.

The wind turbine blade 100 may be formed in a pair of shells. For example, a first shell 150 may extend from a first shell leading edge 160 to a first shell trailing edge 170 and may define a suction surface 180. The first shell 150 may be bonded to a second shell 190. The second shell 190 may extend from a second shell leading edge 200 to a second shell trailing edge 210 and may define a pressure surface 220. Each shell 150, 190 may have areas that include a fiber reinforced material 230 and other areas that include a core material 240. The fiber reinforced materials 110 may include E-glass fiber or a carbon fiber bonded with a composite resin. Other potential composite materials include graphite, boron, aramid, and other organic materials and hybrid fiber mixes that can form reinforcing fibers. The reinforcing fibers may be in the form of a continuous strand mat, woven, or unidirectional mat. The core materials 240 may include foam, balsawood, engineered core materials, and the like. Other types of materials may be used herein.

The shells 150, 190 may be applied as multiple thin layers 260 in the form of a fiber resin matrix. The matrix holds the fibers in place and, under an applied load, deforms and distributes stresses to the fibers. The composite layers 260 may be formed into laminated or sandwich structures. Laminated structures include successive layers of composite materials bonded together. Sandwich structures may include a low density core between the layers of composite materials. Any number of the layers 260 may be used herein.

Likewise, the individual components of the wind turbine blade 100 also made in individual molds. For the example, the lay up of the spar cap 130 may be done in a spar cap mold 300 and the like. As described above, any number the layers 260 may be applied in an automated or manual method to produce the spar cap 130 and other types of components.

A defect 250 in one or more of the layer 260 may have an impact on the overall operation and lifetime of the components such as the spar cap 130 and the like. The defect 250 may include, for example, an out of plane wave 270 in one or more of the layers 260. As described above, the out of plane wave 270 may reduce the overall load carrying capacity of the wind turbine blade 100 and the components thereof and eventually may lead to failure in the field.

The components of the wind turbine blade 100 thus may be inspected via a wind turbine blade profilometry inspection system 280 as may be described herein. The wind turbine blade profilometry inspection system 280 may be a type of non-destructive testing using a profilometer 290 to accurately measure surface characteristics of the layers 260 of the components such as the spar cap 130. A profilometer 290 is an optical device used to measure height variations on a surface with great precision. From these height differences, a three-dimensional surface map may be created. Specifically, the profilometer 290 may use the wave properties of light to compare an optical path between a test surface and a reference surface. An example of a profilometer suitable for use herein include the profile sensors offered by LMI Technologies of Vancouver, Canada under the "Gocator®" mark. Other types of three-dimensional sensors may be used herein. Other components and other configurations may be used herein.

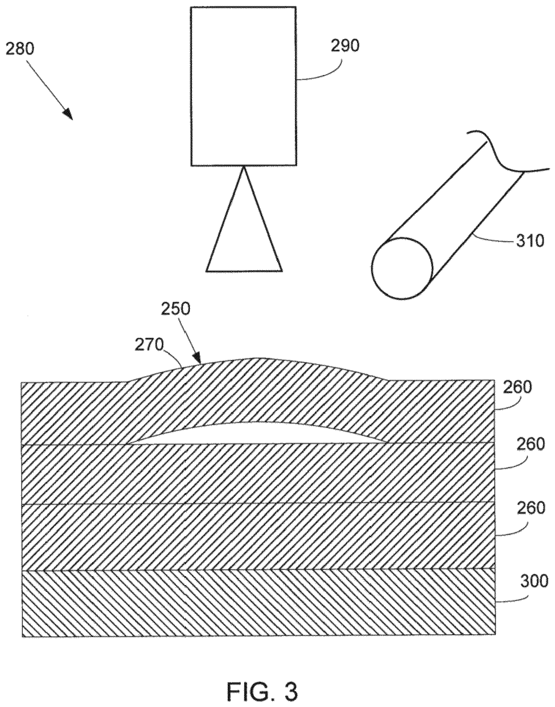

As is shown in Fig. 3, the wind turbine blade profilometry inspection system 280 may be positioned adjacent to the mold 300 used for the lay up of the components such as the spar cap 130 via a composite material applicator 310 and the like. Alternatively, a manual process also may be used. The profilometer 290 may be positioned adjacent to the mold 300. The mold 300 thus acts as the reference surface for the profilometer 290. The profilometer 290 may scan each layer 260 as applied during the lay up process and measure the changes in thickness. The resolution of the profilometer maybe about 0.01 to about 0.06 millimeters to measure displacements of about one tenth of a ply thickness. Other types of resolution may be used herein. The profilometer 290 may detect an out of plane wave 270 in a layer 260 and provide an alert when such a wave may be detected so as to stop the lay up process. In addition to the lay up location, the profilometer 290 may be positioned about the layers 260 during curing so as to ensure also that no out of plane displacement occurred after the lay up process.

The wind turbine blade profilometry inspection system 280 thus may provide fast and efficient inspection of turbine components such as the spar cap 130 during the lay up process and/or during the curing process. The system 280 may monitor changes and component thickness as each layer 260 is added. The system 280 thus may prevent the costly rejection of fully cured turbine blade components. Moreover, the robust system 280 described herein may lead to a reduced risk of field failure. Although the wind turbine blade profilometry inspection station 280 has been discussed in the context of the wind turbine components such as the spar cap 130, other types of composite material surfaces, structures, and the like also may be inspected herein.

It should be apparent that the foregoing relates only to certain embodiments of the present application and the resultant patent. Numerous changes and modifications may be made herein by one of ordinary skill in the art without departing from the general spirit and scope of the invention as defined by the following claims and the equivalents thereof.

Various aspects and embodiments of the present invention are defined by the following clauses:
1. A method of inspecting composite turbine blade spar caps during lay-up, comprising:
   applying a layer to a mold;
   measuring a surface characteristic of the layer with a profilometer; and
   determining if the layer has an out of plane wave therein based on the measured surface characteristic.
2. The method of clause 1, wherein the step of applying a layer to a mold comprises applying a fiber reinforced material and/or a core material.
3. The method of clause 1, wherein the step of applying a layer to a mold comprises applying a fiber resin matrix.
4. The method of clause 1, further comprising the step of applying a further layer if no out of plane wave is determined.
5. The method of clause 1, further comprising the step of stopping the application of further layers if an out of plane wave is determined.
6. The method of clause 1, further comprising the step of measuring the surface characteristic of the layer after curing.
7. The method of clause 1, wherein the step of determining if the layer has an out of plane wave therein based on the measured surface characteristic comprises creating a three-dimensional surface map of the layer.
8. The method of clause 1, wherein the step of measuring a surface characteristic of the layer with a profilometer comprises measuring the surface characteristics of the layer with a profilometer having a resolution of about 0.01 to about 0.06 millimeters.
9. The method of clause 1, wherein the step of applying a layer to a mold comprises applying the layer in an automated or a manual process.
10. The method of clause 1, wherein the step of applying a layer to a mold comprises applying the layer to a spar cap mold.
11. A turbine blade profilometry inspection system, comprising:
   a spar cap mold;
   a composite material applicator positioned about the spar cap mold; and
   a profilometer positioned about spar cap mold;
   wherein the profilometer determines a thickness of each layer applied to the spar cap mold by the composite material applicator so as to detect a layer with an out of plane wave.
12. The turbine blade profilometry inspection system of clause 11, wherein each layer comprises a fiber reinforced material and/or a core material.
13. The turbine blade profilometry inspection system of clause 11, wherein each layer comprises a fiber resin matrix.
14. A method of inspecting composite material turbine blade components, comprising:
   applying a composite material layer to a mold;
   measuring a surface characteristic of the composite material layer with a profilometer;
   creating a three-dimensional surface map of the composite material layer; and
   determining if the composite material layer has an out of plane wave therein.
15. The method of clause 14, wherein the step of applying a composite material layer to a mold comprises applying a composite material layer of a fiber reinforced material and/or a core material.
16. The method of clause 14, further comprising the step of applying a further composite material layer to the mold if no out of plane wave is determined or stopping the application of further composite material layers if an out of plane wave is determined in the layer.
17. The method of clause 14, wherein the step of measuring a surface characteristic of the composite material layer with a profilometer comprises measuring the surface characteristics of the composite material layer with a profilometer having a resolution of about 0.01 to about 0.06 millimeters.
18. The method of clause 14, wherein the step of applying a composite material layer to a mold comprises applying a composite material layer to a spar cap mold.
19. The method of clause 14, wherein the step of applying a composite material layer to a mold comprises applying the composite material layer in an automated or manual process.
20. The method of clause 14, further comprising the step of measuring the surface characteristic of the composite material layer after curing.

## Claims

1. A method of inspecting composite turbine blade spar caps (130) during lay-up, comprising:
applying a layer (260) to a mold (300);
measuring a surface characteristic of the layer (260) with a profilometer (290); and
determining if the layer (260) has an out of plane wave (270) therein based on the measured surface characteristic.

2. The method of claim 1, wherein the step of applying a layer (260) to a mold (300) comprises applying a fiber reinforced material (230) and/or a core material (240).

3. The method of claim 1, wherein the step of applying a layer (260) to a mold (300) comprises applying a fiber resin matrix (230, 240).

4. The method of claim 1, further comprising the step of applying a further layer (260) if no out of plane wave (270) is determined.

5. The method of claim 1, further comprising the step of stopping the application of further layers (260) is an out of plane wave (270) is determined.

6. The method of claim 1, further comprising the step of measuring the surface characteristic of the layer (260) after curing.

7. The method of claim 1, wherein the step of determining if the layer (260) has an out of plane wave (270) therein based on the measured surface characteristic comprises creating a three-dimensional surface map of the layer (260).

8. The method of claim 1, wherein the step of measuring a surface characteristic of the layer (260) with a profilometer (290) comprises measuring the surface characteristics of the layer (260) with a profilometer (290) having a resolution of about 0.01 to about 0.06 millimeters.

9. The method of claim 1, wherein the step of applying a layer (260) to a mold (300) comprises applying the layer (260) in an automated or a manual process.

10. The method of claim 1, wherein the step of applying a layer (260) to a mold (300) comprises applying the layer (260) to a spar cap mold (300).

11. A turbine blade profilometry inspection system (280), comprising:
a spar cap mold (300);
a composite material applicator (310) positioned about the spar cap mold (300); and
a profilometer (290) positioned about spar cap mold (300);
wherein the profilometer (290) determines a thickness of each layer (260) applied to the spar cap mold (300) by the composite material applicator (310) so as to detect a layer (260) with an out of plane wave (270).

12. The turbine blade profilometry inspection system (280) of claim 11, wherein each layer (260) comprises a fiber reinforced material (230) and/or a core material (240).

13. The turbine blade profilometry inspection system (280) of claim 11, wherein each layer (260) comprises a fiber resin matrix (230, 240).

14. A method of inspecting composite material turbine blade components, comprising:
applying a composite material layer to a mold (300);
measuring a surface characteristic of the composite material layer with a profilometer (290);
creating a three-dimensional surface map of the composite material layer; and
determining if the composite material layer has an out of plane wave (270) therein.

15. The method of claim 14, wherein the step of applying a composite material layer to a mold (300) comprises applying a composite material layer of a fiber reinforced material (230) and/or a core material (240).
